# EUROPÄISCHE PATENTSCHRIFT

(11) **EP 0 617 199 B1**
(45) Veröffentlichungstag und Bekanntmachung des Hinweises auf die Patenterteilung: **31.01.1996**
(21) Anmeldenummer: 94103916.6
(22) Anmeldetag: 14.03.1994
(51) Int. Cl.: F01N 3/20, F01N 3/28, B01D 53/56

(54) **Katalysator zur Stickoxidminderung im Abgas eines Verbrennungsmotors**
Catalytic converter for reducing nitrogen oxide content in exhaust gases of an internal combustion engine
Catalyseur pour le réduction de la teneur en oxydes d'azote dans le gaz d'échappement d'un moteur à combustion interne

(30) Priorität: 26.03.1993 DE 4309891
(43) Veröffentlichungstag der Anmeldung: 28.09.1994
(73) Patentinhaber: SIEMENS AKTIENGESELLSCHAFT, D-80333 München (DE)
(72) Erfinder: Schmelz, Helmut, Dr., D-83209 Prien (DE)

(56) Entgegenhaltungen:
- EP-A- 0 364 694
- EP-A- 0 470 334
- FR-A- 2 393 145
- DATABASE WPI Section Ch, Week 9201, 1992 Derwent Publications Ltd., London, GB; Class E11, AN 92-004258 & JP-A-3 258 326 (BABCOCK-HITACHI) 18. November 1991
- PATENT ABSTRACTS OF JAPAN vol. 10, no. 166 (C-353) 13. Juni 1986 & JP-A-61 018 438 (TOYOTA) 27. Januar 1986
- PATENT ABSTRACTS OF JAPAN vol. 012, no. 222 (M-712) 24. Juni 1988 & JP-A-63 018 123 (FUJI) 26. Januar 1988

## Beschreibung

Die Erfindung bezieht sich auf einen Katalysator gemäß dem Oberbegriff des Anspruchs 1.

Bei der Verbrennung fossiler Treibstoffe in Verbrennungsmotoren bilden sich aufgrund der bei der Verbrennung vorherrschenden thermodynamischen Bedingungen Stickoxide. Diese Stickoxide tragen in erheblichem Maß zu den Umweltproblemen der Luftverschmutzung und des sauren Regens bei.

Zur Senkung des Stickoxidgehalts in Abgasen von Verbrennungsmotoren ist es bekannt, eine Vielzahl von Primär- und Sekundarmaßnahmen zur Stickoxidminderung zu verwenden. Primarmaßnahmen sind dabei alle Maßnahmen, die ergriffen werden, um die Stickoxidbildung bereits bei der Verbrennung der fossilen Energieträger mit Luftsauerstoff möglichst gering zu halten. Sekundarmaßnahmen sind dabei alle Maßnahmen, bei denen die einmal gebildeten Stickoxide katalytisch und/oder auf anderen verfahrenstechnischen Wegen beseitigt werden.

Hierzu sind beispielsweise bei Abgasen von Ottomotoren Katalysatoren bekannt, die mit Platin und/oder anderen Edelmetallen beschichtet sind, und an denen die Stickoxide mit im Abgas enthaltenen Kohlenwasserstoffen und Kohlenmonoxid sowie Luftsauerstoff zu molekularem Stickstoff reduziert werden. Ebenso ist es bekannt, Abgas von Diesel- und Magermotoren mittels Katalysatoren zu entsticken, die nach dem Verfahren der selektiven katalytischen Reduktion (SCR) arbeiten. An solchen sogenannten DeNOₓ-Katalysatoren werden die Stickoxide mit zuvor in das Abgas eingebrachtem Ammoniak an den katalytisch aktiven Zentren des Katalysators zu Stickstoff und Wasser umgesetzt. Dabei wird das Ammoniak nicht im Kraftfahrzeug mitgeführt, sondern kann je nach Bedarf aus beispielsweise einer wäßrigen Harnstofflösung gebildet werden. Als katalytisch aktives Material werden dabei zumeist Oxide eines oder mehrerer der Elemente Eisen, Kupfer, Titan, Vanadium, Wolfram, Molybdän, Chrom, Mangan, Cer usw. verwendet.

Weil die obengenannten Verbrennungsmotoren in Kraftfahrzeugen im Straßenverkehr mit variabler Last und mit teilweise recht großen Last sprüngen betrieben werden, ist derzeit keine Lösung vorhanden, in welcher Weise für die verschiedenen Betriebszustände der Verbrennungmotoren gleichzeitig hohe Abscheideraten für Stickoxide und ein verschwindend geringer Schlupf von bei der katalytischen Umsetzung der Stickoxide unverbrauchtem Reduktionsmittel, wie z. B. Ammoniak, erreicht werden kann.

Zwar ist es aus der JP 03258326, Babcock-Hitachi K.K., bekannt, daß die spezifische Oberfläche des Katalysators und damit seine pro Längeneinheit speicherbare Reduktionsmittelmenge in Strömungsrichtung des Abgases zunimmt. Dies kann durch eine Auswahl verschiedener Katalysatormaterialien und/oder durch eine geeignete Beschichtung eines ausgewählten katalysatormaterials erreicht werden. Auf diese Weise sind aber immer mindestens zwei verschiedene Katalysatortypen vorgesehen.

Der Erfindung liegt daher die Aufgabe zugrunde, einen Katalysator der eingangs genannten Art anzugeben, mit dem sich für alle Betriebszustände des Verbrennungsmotors hohe Abscheidegrade für Stickoxide bei gleichzeitig geringem Reduktionsmittelschlupf ergeben, und an dem eine Zunahme der pro Längeneinheit speicherbaren Reduktionsmittelmenge einfach realisiert ist.

Diese Aufgabe wird erfindungsgemäß dadurch gelöst, daß die Dicke der katalytisch aktiven Schicht in Strömungsrichtung des Agbases zunimmt. Mit dem Begriff "Reduktionsmittel" ist jede Substanz umfaßt, die bei der Reduktion der Stickoxide selbst oxidiert wird, wie zum Beispiel in Ammoniak umwandelbare Substanzen, Kohlenmonoxid, Kohlenwasserstoffe, Alkohol. Das Redukionsmittel kann dabei in der katalytisch aktiven Schicht und/oder dem Katalysatorträger gespeichert sein.

Auf diese Weise kann bei der Herstellung des Katalysators ein und dasselbe Katalysatormaterial verwendet werden, welches in fertigungstechnisch besonders einfacher Weise mit unterschiedlicher Dicke vorgesehen wird. Diese Zunahme kann sowohl kontinuierlich als auch diskontinuierlich erfolgen. Gleichzeitig wird erreicht, daß die in Strömungsrichtung des Abgases zunächst angeordneten Teile des Katalysators eine relativ geringe Dicke zur Speicherung von Redukionsmittel aufweisen. Hierdurch ist ein besseres Anspringverhalten des Katalysators bedingt gegenüber einer in diesem Bereich größeren Dicke des Katalysators. Das heißt auch, daß der Katalysator nach Aufbrauch des gespeicherten Reduktionsmittels aufgrund seiner geringen Dicke wieder schnell mit dem Reduktionsmittel auffüllbar ist und damit seinen ursprünglichen Betriebszustand schnell wieder erreicht. Durch die in Strömungsrichtung des Abgases zunehmende Dicke der katalytisch aktiven Schicht ist gewährleistet, daß bei hohem Stickoxidausstoß des Motors zudem genügend Reduktionsmittel zur Stickoxidminderung bereitgestellt werden kann. Darüber hinaus ist es auf diese Weise möglich, in den Bereichen hoher speicherbarer Reduktionsmittelmengen, also großer Dicke, sogenannte Reduktionsmittelpuffer zu schaffen. Diese Puffer bauen sich während des Normalbetriebes infolge der in Strömungsrichtung des Abgases sinkenden Reduktionsmittel-Konzentration sowie der daraus resultierenden sinkenden Reduktionsmitteleinspeicherung auf. Weil die Speicherkapazität des Katalysators für das Reduktionsmittel mit zunehmender Temperatur abnimmt, dienen diese Puffer dazu, die beispielsweise infolge einer drastischen Temperaturerhöhung des Abgases vom Katalysator desorbierten Reduktionsmittelmengen zu speichern. Somit wird wirkungvol verhindert, daß das Reduktionsmittel aus dem Katalysator ausgetragen wird.

Zur Erreichung einer einfachen Einstellung des Reduktionsmittelgehalts in der katalytisch aktiven Schicht und eines schnellen Anspringverhaltens des Katalysators, ist es vorteilhaft, wenn die Dicke der katalytisch aktiven Schicht am Gaseintritt etwa die Dicke der Reaktionszone aufweist. Die Dicke der Reaktionszone ist dabei definiert als die Materialtiefe, in der die Konzentration an Stickoxiden auf nahezu Null abgesunken ist.

Um auch bei hohen Lastforderungen genügend Reduktionsmittel zur Umsetzung der Stickoxide bereitzustellen und dabei gleichzeitig einen Reduktionsmittelschlupf zu vermeiden, ist es vorteilhaft, wenn die Dicke der katalytisch aktiven Schicht am Gasaustritt ein Vielfaches der Dicke der Reaktionszone aufweist.

Um grundsätzlich und im besonderen in Bereichen des Katalysators, in denen nur relativ kleine Reduktionsmittelmengen speicherbar sind, das Reduktionsmittel besonders schnell aus der Gasphase an die Oberfläche des Katalysators zu führen, ist es vorteilhaft, wenn im Katalysator Mittel zur Erzeugung von turbulenten Strömungen des Abgases vorgesehen sind. Bei Plattenkatalysatoren sind dies Auslenkelemente, wie zum Beispiel schräg gestellte Laschen, bei Wabenkatalysatoren sind dies seitlich versetzte Strukturen, wie zum Beispiel gewellte Kanäle, versetzte Kanalabschnitte und ähnliche Strukturen. Hierdurch werden Nachteile, wie Transportprobleme und Aktivitätseinbußen, die bei einer überwiegend laminaren Strömung des Abgases auftreten, vermieden. Durch die so erzeugte turbulente Strömung des Abgases wird außerdem der Transport der Stickoxide in die Reaktionszone beschleunigt, was auch im Gleichgewichtsbetrieb eine hohe Aktivität des Katalysators bedingt.

Weitere vorteilhafte Ausgestaltungen der Erfindung sind den übrigen Unteransprüchen zu entnehmen.

Ausführungsbeispiele der Erfindung werden anhand von vier Figuren näher erläutert. Dabei zeigen:
Figur 1 einen schematischen Ausschnitt aus der Abgasleitung eines 300 kW-ladeluftgekühlten LKW-Dieselmotors mit einem erfindungsgemäßen Katalysator;
Figur 2 einen Schnitt durch den Katalysator gemäß Figur 1 entlang der Linie II-II;
Figur 3 in Vergrößerung den in Figur 2 eingestrichelten Ausschnitt m; und
Figur 4 einen Schnitt durch den Katalysator gemäß Figur 1 entlang der Linie IV-IV.

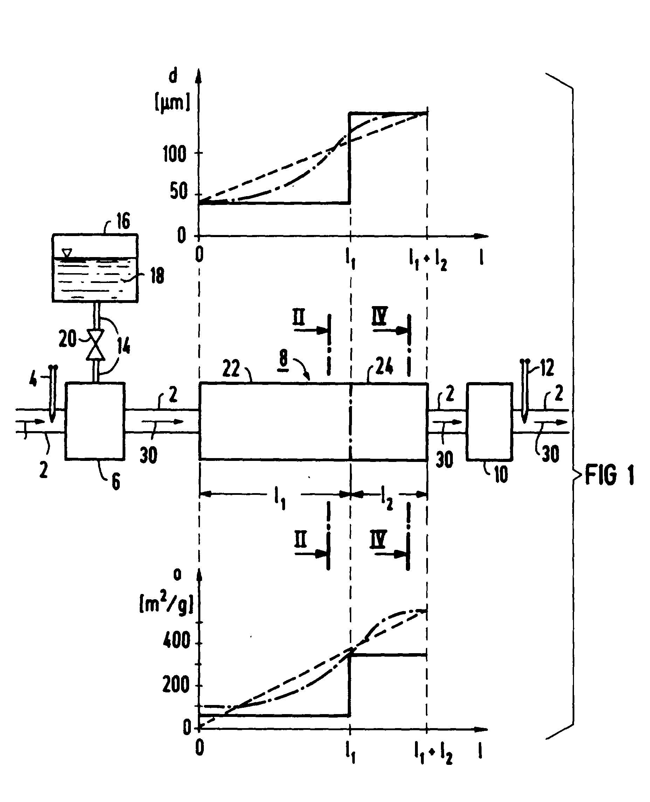

Figur 1 zeigt schematisch einen Ausschnitt aus einer Abgasleitung 2 eines nicht weiter dargestellten LKW-Dieselmotors. In der Abgasleitung 2 sind der Reihe nach ein Temperatursensor 4, ein Hydrolysekatalysator 6, ein DeNOₓ-Katalysator 8, ein Oxidationskatalysator 10 und ein weiterer Temperatursensor 12 eingebaut. An den Hydrolysekatalysator 6 ist eine Reduktionsmittelzuführungsleitung 14 angeschlossen, die ausgehend von einem Vorratsbehälter 16 für ein Reduktionsmittel 18 über ein Eindüsventil 20 in den Hydrolysekatalysator 6 mündet Das Reduktionsmittel 18 ist eine in Ammoniak umwandelbare Substanz, beispielsweise eine wäßrige Harnstofflösung, die gefahrlos im Fahrzeug mitgeführt werden kann. Der DeNOₓ-Katalysator 8 umfaßt zwei Teilkatalysatoren 22, 24, die sich in ihrem Aufbau unterscheiden.

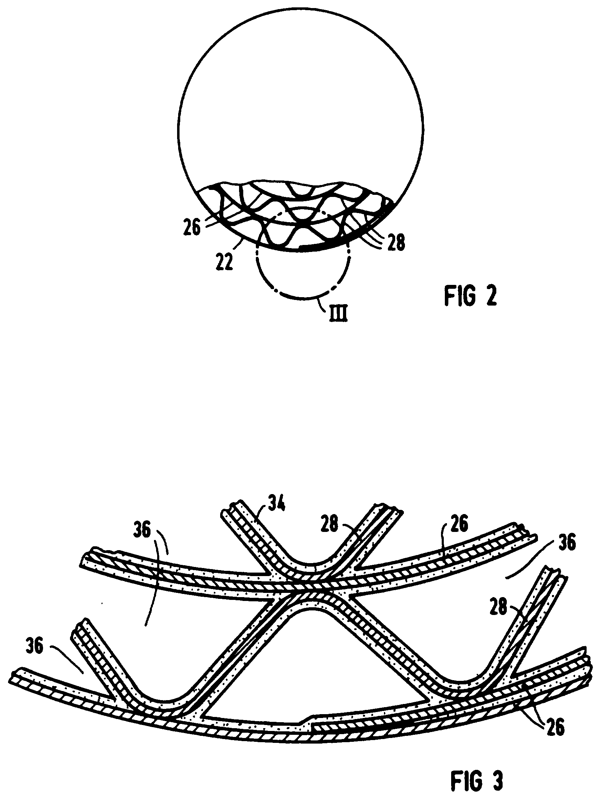

Wie in Figur 2 dargestellt, besteht der Teilkatalysator 22 aus spiralenförmig angeordnetem Blech 26 aus einem nichtrostenden Edelstahl oder einer Heißleiterlegierung. Zwischen die einzelnen Lagen des Blechs 26 ist ein Wellblech 28 eingelegt, das die gesamte spiralförmige Struktur des Blechs 26 abstützt. Das Blech 28 ist ebenfalls aus einem nicht rostenden Edelstahl oder einer Heißleiterlegierung und hat wie das Blech 26 eine Dicke von etwa 40 µm. Die sowohl auf das Blech 26 als auch auf das wellenförmig ausgebildete Blech 28 aufgebrachte katalytisch aktive Schicht 34 (vgl. Figur 3) hat im Ausführungsbeispiel eine Dicke von etwa 40 µm und eine spezifische Oberfläche von etwa 50 m/g, was einer Primärpartikelgröße im Ausgangsmaterial von etwa 15 nm entspricht Der Teil 22 hat im Ausführungsbeispiel eine Länge l₁ von etwa 30 cm. Als katalytisch aktive Substanz in der katalytisch aktiven Schicht 34 wird Titanoxid (TiO₂) mit einem oder mehreren der Zusätze Molybdänoxid (MoO₃), Wolframoxid (WO) und Vanadinoxid (V₂O₅) verwendet Ebenso ist es denkbar, eine Phase der Summenformel VₓMo_{y}O_{32-z} mit x, y ≥ 1, x + y ≤ 12, z ≤ 1 als besonders katalytisch aktive Substanz in der katalytisch aktiven Schicht 34 zu verwenden. Im Ausführungsbeispiel wird der Katalysatorteil 22 im wesentlichen laminar durchströmt. Zusätzlich können an den Blechen 26 und 28 Auslenkelemente für das Abgas 30 vorgesehen sein, wodurch die Wechselwirkung des Reduktionsmittels und der Stickoxide im Abgas 30 mit der katalytisch aktiven Schicht 34 verstärkt wird. Der Verlauf der Dicke d der katalytisch aktiven Schicht 34 ist treppenförmig in dem Diagramm oberhalb des Katalysators 8 eingezeichnet Die Dicke d der katalytisch aktiven Schicht 34 könnte aber ebenso entlang der gepunkteten oder der strichpunktierten Linie verlaufen. Dies bezüglich der Dicke d Gesagte, kann ebenso auf den Verlauf der spezifischen Oberfläche 0 entlang des Katalyators 8 übertragen werden. Im Ausführungsbeispiel ist der treppenförmige Verlauf in dem Diagramm unterhalb des Katalysators realisiert.

Figur 3 zeigt in Vergrößerung den in Figur 2 eingestrichelten Ausschnitt. Bei diesem gewählten Maßstab ist die katalytisch aktive Schicht 34, die beispielsweise durch Eintauchen oder Aufwalzen auf die Bleche 26, 28 aufgebracht ist, zur Verdeutlichung mit dargestellt. Das Abgas 30 strömt dabei durch die zwischen den Blechen 26, 28 befindlichen freigebliebenen Gasräume 36.

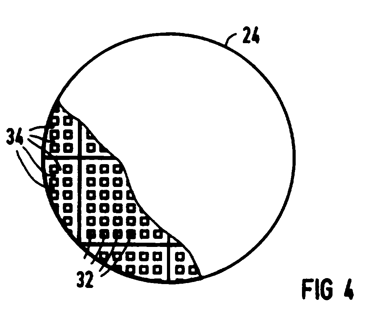

Figur 4 zeigt den Schnitt gemäß der Linie IV-IV in Figur 1 durch den Teilkatalysator 24 des DeNOₓ-Katalysators 8. Dieser in Strömungsrichtung des Abgases 30 hinter dem Teil 22 angeordnete Teilkatalysator 24 ist im Ausführungsbeispiel als vollkeramische Wabe ausgebildet. Die Wandungen des Wabenkörpers sind dabei Katalysatorträger und katalytisch aktive Schicht zugleich. Die Wandstärke der Wabe beträgt im Ausführungsbeispiel etwa 300 µm, was einem Vielfachen der Dicke der Reaktionszone entspricht. Dabei ist die Dicke der Reaktionszone definiert als die Tiefe in der katalytisch aktiven Schicht, bei der der Stickoxidgehalt auf nahezu Null abgesunken ist. Die Dicke der Reaktionszone hängt unter anderem von der NOₓ-Konzenwation und den Porenradien ab und liegt im allgemeinen zwischen 5 und 200 µm; sie beträgt im Ausführungsbeispiel etwa 40 µm. Die spezifische Oberfläche des Wabenmaterials (katalytisch aktiven Materials) beträgt etwa 100 m/g, was einer Primärpartikelgröße des Ausgangsmaterials von etwa 30 nm entspricht. Die katalytisch aktive Schicht 34 besteht aus denselben bereits oben für den Teilkatalysator 22 genannten Materialien. Die spezifischen Oberflächen der katalytisch aktiven Schicht 34 sind damit am Abgaseintritt in den Teilkatalysator 22 innerhalb des bevorzugten Bereichs von 20 bis 100 m/g eingestellt und am Abgasaustritt aus dem Teilkatalysator 24 innerhalb des bevorzugten Bereichs von 40 bis 600 m/g eingestellt. Große spezifische Oberflächen der katalytisch aktiven Schicht 34 können beispielsweise auch durch eine zusätzliche Beschichtung der Katalysatorteile 22, 24 mit Zeolithen und/oder mit Aluminiumoxid erzeugt werden.

Beim Betrieb des nicht weiter dargestellten Dieselmotors strömt beispielsweise ein Abgas 30, das etwa 550 ppm Stickoxide enthält, einen Massenstrom von etwa 350 g/h und eine Temperatur von etwa 280° C aufweist, durch die Abgasleitung 2. Mittels des Eindüsventils 20 wird die zur katalytischen Umsetzung der Stickoxide erforderliche Menge Ammoniak in Form der wäßrigen Harnstofflösung 18 in den Hydrolysekatalysator 6 eingedüst, wodurch der Harnstoff zu Ammoniak und Wasser hydrolysiert. Das mit Ammoniak vermischte Abgas 30 strömt dann in den DeNOₓ-Katalysator 8 und in diesem zuerst in den Katalysatorteil 22. Aufgrund der relativ dünnen Dicke der katalytisch aktiven Schicht 34 kann dieser Katalysatorteil zwar nur relativ wenig Ammoniak speichern, weist aber ein schnelles Anspringverhalten auf und kann ebenso nach einer eventuellen Leerung relativ schnell mit Ammoniak gefüllt werden. Der Großteil der im Abgas enthaltenen Stickoxide wird bereits in diesem Teil 22 mit dem Ammoniak durch die Kontaktierung an der katalytisch aktiven Schicht 34 zu Stickstoff und Wasser umgesetzt. Die im Katalysatorteil 22 noch nicht katalytisch umgesetzten Stickoxide werden dann beim Durchströmen des Katalysatorteils 24 umgesetzt. Aus dem Katalysatorteil 24 mit dem Abgas 30 ausgetragenes Ammoniak wird mittels des Oxidationskatalysators 10 zusammen mit noch im Abgas enthaltenen Kohlenwasserstoffen und Kohlenmonoxid katalytisch umgesetzt, so daß ein weitgehend schadstofffreies Abgas 30 einem hier nicht weiter dargestellten Schalldämpfer zugeführt wird.

Bei einem positiven Lastsprung können sich beispielsweise die Stickoxidkonzentration auf etwa 1300 ppm, der Luftmassenstrom auf etwa 1600 g/h und die Abgastemperatur auf etwa 540 °C erhöhen. Hierdurch verstärkt sich auf der einen Seite die Abreaktion von Stickoxiden und Ammoniak und führt zu einer Absenkung der im DeNOₓ-Katalysator 8 gespeicherten Ammoniakmenge. Andererseits wird Ammoniak freigesetzt, entsprechend dem Temperaturanstieg des Abgases 30, der eine sinkende Speicherkapazität der katalytisch aktiven Schicht 34 für Ammoniak verursacht. Weil der Katalysatorteil 24 gegenüber dem Katalysatorteil 22 auf einer, im Ausführungsbeispiel gewählten Länge l₂ von etwa 15 cm eine größere Schichtdicke der katalytisch aktiven Schicht 34 und die doppelte spezifische Oberfläche je Längeneinheit aufweist, dient dieser Katalysatorteil 24 als Auffangspeicher für das aufgrund des Temperaturanstiegs des Abgases 30 desorbierte Ammoniak. Ohne diese erfindungsgemäßen Eigenschaften des DeNOₓ-Katalysators 8 würden bei positiven Lastsprüngen so große Mengen Ammoniak desorbiert, daß auch der nachgeschaltete Oxidationskatalysator 10 nicht in der Lage wäre, einen erheblichen Ammoniakschlupf und damit eine erhebliche Geruchsbelästigung und Luftverschmutzung zu verhindern.

Durch die erfindungsgemäße Anordnung eines Plattenkatalysators als ersten Teilkatalysator 22 vor einem Wabenkatalysator als zweiten Teilkatalysator 24 wird darüber hinaus die durch Temperatursprünge bedingte thermische Belastung der vollkeramischen Wabe abgeschwächt. Denn die Bleche 26, 28 glätten im Teilkatalysator 22 aufgrund ihrer Wärmeleit- und Wärmeabstrahlcharakteristik allzu große Temperaturänderungen. Trotzdem wäre es ebensogut denkbar, den Katalysatorteil 22 durch vollkeramische Wabenkatalysatoren zu ersetzen, deren Wandstärke in Strömungsrichtung des Abgases 30 zunimmt oder deren Zellenzahl pro Fläche in Strömungsrichtung des Abgases 30 zunimmt.

Ergänzend sei angemerkt, daß die spezifische Speicherkapazität der katalytisch aktiven Schicht 34 im Ausführungsbeispiel für eine Temperatur von 250° C etwa bei 3 g Ammoniak pro kg Katalysator und bei 500° C etwa bei 0,5 g Ammoniak pro kg Katalysator liegt. Als Reduktionsmittel 18 sind neben der im Ausführungsbeispiel verwendeten Harnstofflösung prinzipiell alle Substanzen denkbar, die relativ leicht in Ammoniak umwandelbar sind. Ebenso sind aber auch alternativ dazu Kohlenwasserstoffe, Kohlenmonoxid, usw. denkbar.

Alternativ zu den im Katalysator 22 verwendeten metallischen Blechen 26, 28 könnte als Träger für die katalytisch aktive Schicht 34 auch ein keramischer Träger, beispielsweise aus Aluminiumoxid Al₂O₃ oder ähnlichen Mineralien, vorgesehen sein.

## Patentansprüche

1. Katalysator (8) zur Stickoxidminderung im Abgas (30) eines Verbrennungsmotors in Anwesenheit eines Reduktionsmittels (18), insbesondere eines Dieselmotors, mit einem Katalysatorträger (26, 28) und einer katalytisch aktiven Schicht (34), bei dem in Strömungsrichtung des Abgases (30) die pro Langeneinheit speicherbare Menge an Reduktionsmittel (18) zunimmt,
**dadurch gekennzeichnet**, daß die Dicke der katalytisch aktiven Schicht (34) in Strömungsrichtung des Abgases (30) zunimmt.

2. Katalysator nach Anspruch 1,
**dadurch gekennzeichnet**, daß die Dicke der katalytisch aktiven Schicht (34) am Gaseintritt etwa die Dicke der Reaktionszone aufweist.

3. Katalysator nach Anspruch 1 oder 2,
**dadurch gekennzeichnet**, daß die Dicke der katalytisch aktiven Schicht (34) am Gasaustritt ein Vielfaches der Dicke der Reaktionszone aufweist.

4. Katalysator nach einem der Ansprüche 1 bis 3,
**dadurch gekennzeichnet**, daß die katalytisch aktive Schicht (34) auf einen Metallträger (26, 28) aufgebracht ist.

5. Katalysator nach einem der Ansprüche 1 bis 4,
**dadurch gekennzeichnet**, daß die katalytisch aktive Schicht (34) auf einen Keramikträger aufgebracht ist.

6. Katalysator nach einem der Ansprüche 1 bis 4,
**dadurch gekennnzeichnet**, daß eine vollkeramische Wabe vorgesehen ist, deren Wandstärke in Strömungsrichtung des Abgases (30) zunimmt.

7. Katalysator nach einem der Ansprüche 1 bis 6,
**dadurch gekennzeichnet** , daß in Strömungsrichtung des Abgases (30) zunächst ein Teilkatalysator (22) mit einem metallischen Träger (26, 28) und darauf aufgebrachter katalytisch aktiver Schicht (34) und daran anschließend ein weiterer Teilkatalysator (24) mit einer vollkeramischen Wabe angeordnet sind.

8. Katalysator nach einem der Ansprüche 1 bis 7,
**dadurch gekennzeichnet**, daß Mittel zur Erzeugung von turbulenten Strömungen des Abgases (30) vorgesehen sind.

9. Katalysator nach einem der Ansprüche 1 bis 8,
**dadurch gekennzeichnet**, daß in Strömungsrichtung des Abgases (30) zuletzt ein Teilkatalysator angeordnet ist, der als Oxidationskatalysator (10) ausgebildet ist.

10. Katalysator nach einem der Ansprüche 1 bis 9,
**dadurch gekennzeichnet**, daß die katalytisch aktive Schicht Titandioxid (TiO₂) und einen oder mehrere der Zusätze Wolframoxid (WO₂), Molybdänoxid (MoO) und Vanadiumoxid (VO) umfaßt.

11. Katalysator nach einem der Ansprüche 1 bis 10,
**dadurch gekennzeichnet**, daß die katalytisch aktive Schicht eine Phase mit der Summenformel VₓMo_{y}O_{32-z} mit x + y ≤ 12; x, y ≥ 1 und z ≤ 1 umfaßt.

## Claims

1. Catalytic converter (8) for reducing nitrogen oxide in the exhaust gas (30) of an internal combustion engine, in particular a diesel engine, in the presence of a reducing agent (18), having a catalyst carrier (26, 28) and a catalytically active layer (34), wherein the quantity of reducing agent (18), which can be stored per unit of length, increases in the direction of flow of the exhaust gas (30), characterised in that the thickness of the catalytically active layer (34) increases in the direction of flow of the exhaust gas (30).

2. Catalytic converter according to claim 1, characterised in that the thickness of the catalytically active layer (34) at the gas inlet has substantially the thickness of the reaction zone.

3. Catalytic converter according to claim 1 or 2, characterised in that the thickness of the catalytically active layer (34) at the gas outlet is a multiple of the thickness of the reaction zone.

4. Catalytic converter according to one of the claims 1 to 3, characterised in that the catalytically active layer (34) is applied to a metal carrier (26, 28).

5. Catalytic converter according to one of the claims 1 to 4, characterised in that the catalytically active layer (34) is applied to a ceramic carrier.

6. Catalytic converter according to one of the claims 1 to 4, characterised in that a fully ceramic honeycomb is provided, the wall thickness of which honeycomb increases in the direction of flow of the exhaust gas (30).

7. Catalytic converter according to one of the claims 1 to 6, characterised in that arranged in the direction of flow of the exhaust gas (30) in the first instance there is a partial catalytic converter (22) having a metallic carrier (26, 28) and catalytically active layer (34) applied thereto and following this there is a further partial catalytic converter (24) having a fully ceramic honeycomb.

8. Catalytic converter according to one of the claims 1 to 7, characterised in that means for generating turbulent flows of the exhaust gas (30) are provided.

9. Catalytic converter according to one of the claims 1 to 8, characterised in that arranged in the direction of flow of the exhaust gas (30) finally there is a partial catalytic converter which is formed as an oxidation catalytic converter (10).

10. Catalytic converter according to one of the claims 1 to 9, characterised in that the catalytically active layer includes titanium dioxide (TiO₂) and one or more of the additives tungsten oxide (WO₂), molybdenum oxide (MoO) and vanadium oxide (VO).

11. Catalytic converter according to one of the claims 1 to 10, characterised in that the catalytically active layer includes a phase with the summation formula VₓMo_{y}O_{32-z} with x + y ≤ 12; x, y ≥ 1 and z ≤ 1.

## Revendications

1. Catalyseur (8) destiné à abaisser la teneur en oxydes d'azote des gaz (30) d'échappement d'un moteur à combustion en présence d'un agent (18) réducteur, notamment d'un moteur diesel, comportant un support (26,28) de catalyseur et une couche (34) active catalytiquement, dans laquelle la quantité d'agent réducteur (18) qui peut s'accumuler par unité de longueur augmente suivant la direction d'écoulement des gaz (30) d'échappement, caractérisé en ce que l'épaisseur de la couche (34) active catalytiquement augmente suivant la direction d'écoulement des gaz (30) d'échappement.

2. Catalyseur suivant la revendication 1, caractérisé en ce que l'épaisseur de la couche (34) active catalytiquement est, à l'entrée des gaz, environ égale à l'épaisseur de la zone de réaction.

3. Catalyseur suivant la revendication 1 ou 2, caractérisé en ce que, l'épaisseur de la couche (34) active catalytiquement est, à la sortie des gaz, égale à un multiple de l'épaisseur de la zone de réaction.

4. Catalyseur suivant l'une des revendications 1 à 3, caractérisé en ce que, la couche (34) active catalytiquement est montée sur un support (26,28) métallique.

5. Catalyseur suivant l'une des revendications 1 à 4, caractérisé en ce que, la couche (34) active catalytiquement est montée sur un support en céramique.

6. Catalyseur suivant l'une des revendications 1 à 4, caractérisé en ce que, il est prévu un nid d'abeille entièrement en céramique, dont l'épaisseur de paroi augmente suivant la direction d'écoulement des gaz (30) d'échappement.

7. Catalyseur suivant l'une des revendications 1 à 6, caractérisé en ce que, sont montés, suivant la direction d'écoulement des gaz (30) d'échappement, d'abord un catalyseur (22) partiel comportant un support (26,28) métallique, une couche (34) active catalytiquement qui est montée sur celui-ci, et un catalyseur (24) partiel supplémentaire relié à la couche, comportant un nid d'abeille entièrement en céramique.

8. Catalyseur suivant l'une des revendications 1 à 7, caractérisé en ce que, sont prévus des moyens destinés à produire des courants turbulents des gaz (30) d'échappement.

9. Catalyseur suivant l'une des revendications 1 à 8, caractérisé en ce que, il est disposé suivant la direction d'écoulement des gaz (30) d'échappement, en dernier, un catalyseur partiel, qui a la forme d'un catalyseur (10) d'oxydation.

10. Catalyseur suivant l'une des revendications 1 à 9, caractérisé en ce que, la couche active catalytiquement comprend du dioxyde de titane (TiO₂) et un ou plusieurs oxydes supplémentaires parmi l'oxyde de tungstène (WO₂), l'oxyde de molybdène (MoO) et l'oxyde de vanadium (VO).

11. Catalyseur suivant l'une des revendications 1 à 10, caractérisé en ce que, la couche active catalytiquement comporte une phase de formule brute VₓMo_{y}O_{32-z} avec x + y ≤ 12; x, y étant ≥ 1 et z étant ≤ 1.
